# EUROPEAN PATENT SPECIFICATION

(11) **EP 2 500 251 B1**
(45) Date of publication and mention of the grant of the patent: **13.03.2013**
(21) Application number: 12159398.2
(22) Date of filing: 14.03.2012
(51) Int. Cl.: B62K 25/24

(54) **Saddle-ride type vehicle**
Sattelfahrzeug
Véhicule à monture à selle

(30) Priority: 18.03.2011 JP 2011060035
(43) Date of publication of application: 19.09.2012
(73) Proprietor: Honda Motor Co., Ltd., Tokyo 107-8556 (JP)
(72) Inventor: Mori, Yotaro, Wako-shi, Saitama 351-0193 (JP); Uchida, Hiroyuki, Wako-shi, Saitama 351-0193 (JP); Niitsu, Tomiji, Wako-shi, Saitama 351-0193 (JP); Kinoshita, Yoshiteru, Wako-shi, Saitama 351-0193 (JP); Yahashi, Motoyuki, Wako-shi, Saitama 351-0193 (JP)
(74) Representative: Stevens, Jason Paul

(56) References cited:
- DE-A1- 19 633 692
- DE-U1- 9 404 873
- GB-A- 2 348 628

## Description

The present invention relates to an improvement in a front wheel suspension device of a saddle-ride type vehicle.

In a saddle-ride type vehicle, a front wheel is attached to a vehicle body frame via a front wheel suspension device such that it is capable of vertical movement, and a rear wheel is attached to the vehicle body frame via a rear wheel suspension device such that it is capable of vertical movement.

A front wheel suspension device having an upper arm and a lower arm as main elements is already known from US 6402175, for example.

As shown in Fig. 1 of US 6402175, a steering shaft 6 is turnably attached to a front portion of a vehicle body frame. (Here, the reference numbers are as used in US 6402175.) An upper arm extends toward the front of the vehicle from the steering shaft 6. A lower arm 10 extends toward the front of the vehicle from the vehicle body frame at a position below the upper arm. A front portion of the upper arm and a front portion of the lower arm 10 are connected to a fork member 9. A front wheel 3 is attached to the fork member 9.

The structure described above is called a swing-type front wheel suspension device. In the swing-type front wheel suspension device, the upper arm serves also as a steering link. Thus, the cost of the front wheel suspension device can be reduced.

A line passing through an intersecting point between a bearing 8 and the upper arm and through a pivot 11 in a front portion of the lower arm 10 is an imaginary kingpin shaft 14, and the front wheel 3 is steered about the imaginary kingpin shaft 14.

Incidentally, the fork member 9 moves vertically with the vertical movement of the front wheel 3. The pivot 11 makes an arc-shaped trajectory about a fulcrum 12 of the lower arm 10, and, for example, the pivot 11 moves to point 11'.

The imaginary kingpin shaft 14 tends to lie down and stand up, that is, the angle it makes with the horizontal changes. As result, the characteristics of the vehicle tend to change greatly with the vertical movement of the wheel.

A front wheel suspension device capable of solving this problem is known from EP 1616780, for example.

A front wheel suspension device of EP 1616780 is a so-called double wishbone suspension device, and is capable of suppressing changes in characteristics of a vehicle body by suppressing the change in inclination of a kingpin shaft caused by movement of the suspension.

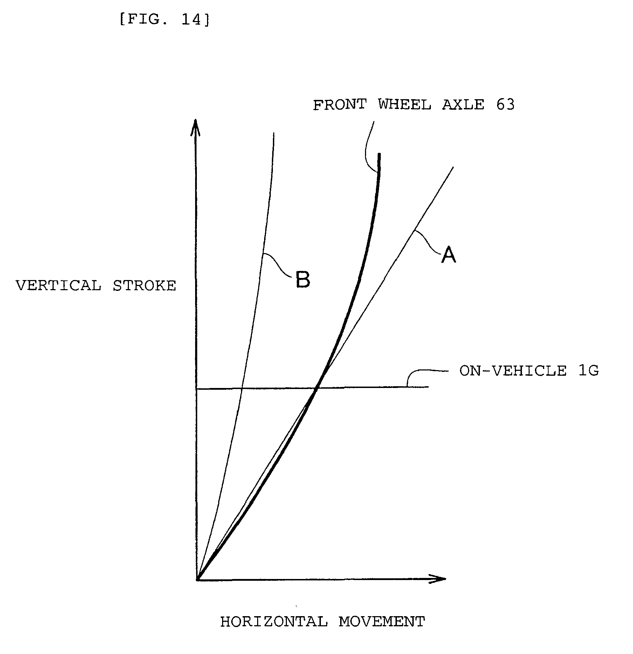

In addition, the following can be said. In the embodiment described below, Fig. 14 shows a trajectory B of a front wheel axle stroke in the double wishbone suspension device for comparison. Following the trajectory B allows the front wheel suspension device to have such a characteristic to preferably follow a nose dive phenomenon where a front fork drops down in a motorcycle.

It can be seen in the structure of EP 1616780 that the front wheel axle moves (or strokes) at an angle close to the vertical direction. In such a stroke characteristic, an anti-nose-dive characteristic is excellent. However, In a case of travelling on an uneven road, it is difficult for the front wheel to stroke in such a way that an Impact from a road surface is released rearward. Thus, there is a problem that a ride comfort is slightly poor.

Moreover, a trajectory of a front wheel axle in a general telescopic fork Is shown by a curve A in Fig. 14 to be described later. In the telescopic fork, the front wheel axle moves (strokes) at an oblique angle, closer to horizontal than the front wheel axle of EP 1616780. In such a characteristic, the front wheel axle can be made to stroke in such a way that an impact from the front wheel is released rearward in a case of travelling on an uneven road. Thus, a ride comfort can be improved. However, the telescopic fork has a problem that the nose dive becomes larger as the stroke becomes larger.

Further suspension devices are known from DE 9404873 U (on which the preamble of claim 1 is based), DE 19633692 and GB 2348628.

In this respect, there is a desire for a front wheel suspension device of a saddle-ride type vehicle which has a trajectory of a front wheel axle similar to that of a telescopic fork in an initial stage of a stroke and has a trajectory of the front wheel axle similar to that of a double wishbone in a latter half of the stroke.

It is an object of at least the preferred embodiments of the invention to provide a saddle-ride type vehicle with a front wheel suspension device which has a trajectory of a front wheel axle similar to that of a telescopic fork in an initial stage of a stroke and which has a trajectory of the front wheel axle similar to that of a double wishbone in a latter half of the stroke.

According to a first aspect of the present invention, there is provided a saddle-ride type vehicle with a front wheel suspension device which includes: a steering shaft provided in a front portion of a vehicle body frame; a steering member which can be turned about the steering shaft by operation of a handle attached to the steering shaft; an upper arm extending toward the front of the vehicle from an upper pivot shaft and swinging vertically about the upper pivot shaft, the upper pivot shaft provided in the steering member and extending in a lateral direction of the vehicle; a fork member connected to a front portion of the upper arm and extending downward to pivotally support a front wheel; a lower arm extending toward the front of the vehicle from a lower pivot shaft to run below the upper arm, the lower pivot shaft provided in the vehicle body frame at a position below the upper pivot shaft and extending in the lateral direction of the vehicle, the lower arm connected to the fork member and swinging vertically about the lower pivot shaft; and a cushion unit between the vehicle body frame and one of the lower arm and the fork member, wherein a front end of the lower arm is connected to the fork member via a trajectory correction link mechanism for correcting a stroke trajectory of a front wheel axle, the trajectory correction link mechanism includes a link member connecting the lower arm and the fork member to each other and a tension rod connecting the link member to the vehicle body frame, the tension rod is swingably and pivotally supported by the vehicle body frame, and the link member includes a fork-member-side connection portion connected to the fork member, a lower-arm-side connection portion connected to the lower arm, and a tension-rod-side connection portion connected to the tension rod; characterized in that the tension rod extends downward toward the rear of the vehicle; and in that the lower arm includes: a U-shaped arm portion having a U-shape in plan view; a link attachment portion which extends downward toward the front from a front portion of the U-shaped arm portion in a side view of the vehicle and to which the link member is connected; and a cushion attachment portion which extends upward toward the rear from the front portion of the U-shaped arm portion and to which the cushion unit is connected, and in the link member, a portion between the tension-rod-side connection portion and the lower-arm-side connection portion is a curved portion which is curved to project toward the front of the vehicle.

According to the first aspect of the present invention, in the swing-type front wheel suspension device which includes the lower arm and the upper arm and in which the upper arm serves also as the steering link, the front end of the lower arm is connected to the fork member via the trajectory correction link mechanism for correcting the stroke trajectory of the front wheel axle.

When the fork member moves upward in the stroke direction, a connection point of the fork member with the lower arm moves upward. At this time, a lower portion of the tension rod moves to make a trajectory with a shape of an arc having a centre at a position frontward of and above the arc.

Thus, the link member connected to the tension rod also moves to make a trajectory with a shape similar to the arc having a centre at a position frontward of and above the arc.

A kingpin shaft of the fork member hardly changes its angle. As a result, a change in a trail amount of the vehicle caused by the change of stroking can be reduced.

In addition, the front wheel axle moves to make a trajectory with a shape similar to the arc having a centre at a position frontward of and above the arc. Thus, in an initial stage of the stroke, the stroking is performed in such a way that the front wheel moves toward the rear of the vehicle. Upon moving upward in the stroke direction, the front wheel axle also moves toward the rear of the vehicle in the stroke direction. This movement toward the rear of the vehicle in the stroke direction allows a shock (impact force) caused by unevenness in a road surface to be released toward the rear of the vehicle. Thus, an excellent ride comfort can be obtained.

In the latter half of the stroke, there is no movement toward the rear of the vehicle in the stroke direction, and a movement upward in the stroke direction is the main movement. The movement upward In the stroke direction improves the anti-nose-dive characteristic.

Further, the link member swings about the lower-arm-side connection portion with the movement of the fork member. In this swinging, the curved portion overlaps with the lower arm; in other words, the lower arm relatively moves into the curved portion. As a result, the swinging amount of the link member can be increased while avoiding interference between the lower arm and the link member.

Thus, the invention provides a saddle-ride type vehicle with a front wheel suspension device which has characteristics similar to that of a telescopic fork in the initial stage of a stroke and has characteristics similar to that of a double wishbone in the latter half of the stroke.

Preferably, the lower-arm-side connection portion is disposed closer the rear of the vehicle than the fork-member-side connection portion.

With this arrangement, the lower arm can be made shorter than the case where the front portion of the lower arm is directly connected to the fork member, by a length reduced by connection via the link member. Thus, the front wheel suspension can be made more compact.

In a preferred form, the cushion unit is connected to the lower arm.

The lower arm is a member which is connected to the vehicle body frame in a vertically swingable manner and which extends toward the front of the vehicle. A swing trajectory of the lower arm is a vertically-extending trajectory, and this makes a damping performance of the cushion unit excellent.

Preferably, the tension rod is pivotally supported by the vehicle body frame at a position below the steering shaft.

The steering shaft is disposed at the front end of the vehicle body frame. Extending the tension rod toward the rear of the vehicle from the position below such a steering shaft allows the tension rod to be made long enough that the lower pivot shaft has a desired path.

In a preferred form, the fork member includes: a left leg portion which extends from a left end portion of the front wheel axle; a right leg portion which extends from a right end portion of the front wheel axle; an upper cross portion which connects the left and right leg portions to each other and to which the upper arm is connected; and a lower cross portion which connects the left and right leg portions to each other at a position below the upper cross portion and to which the lower arm is connected, and part of the tension rod is capable of moving into a space surrounded by the left and right leg portions, the upper cross portion, and the lower cross portion.

According to this aspect of the present invention, part of the tension rod can move into the space surrounded by the left and right leg portions, the upper cross portion, and the lower cross portion of the fork member. Since there is no worry of the tension rod interfering with the fork member, the tension rod can be extended in the longitudinal direction of the vehicle. Thus, the tension rod can be made longer.

Preferably, a rib is provided along the curved portion in a front face of the curved portion, the front face facing forward in the vehicle. The rigidity of the curved portion can be easily Improved by providing the ribs.

A preferred embodiment of the invention will now be described by way of example only and with reference to the accompanying drawings, in which:
Fig. 1 is a left-side view of a front portion of a saddle-ride type vehicle;
Fig. 2 is an enlarged view of a main portion of Fig. 1;
Fig. 3 is a cross-sectional view taken along the line 3-3 of Fig. 2;
Fig. 4 is a cross-sectional view taken along the line 4-4 of Fig. 2;
Fig. 5 is a left-side view of a lower arm;
Fig. 6 is a perspective view of the lower arm;
Fig. 7 is a left-side view of a link member;
Fig. 8 is a view in a direction of the arrow 8 of Fig. 7;
Fig. 9 is a front view of the saddle-ride type vehicle;
Fig. 10 is a cross-sectional view taken along the line 10-10 of Fig. 2;
Fig. 11 is a schematic view of a front wheel suspension device in an on-vehicle 1 G state;
Fig. 12 is a schematic view of the front wheel suspension device when a cushion unit is fully expanded (in a fully-expanded state);
Fig. 13 is a schematic view of the front wheel suspension device when the cushion unit is fully contracted (in a fully-contracted state);
Fig. 14 is a view showing a movement trajectory of a front wheel axle;
Fig. 15 is a plan view of the front portion of the saddle-ride type vehicle;
Fig. 16 is a view corresponding to Fig. 15 showing the front wheel in a steered state; and
Fig. 17 is a view showing a modified example of Fig. 2.

An embodiment of the invention is described below based on the attached drawings. Note that the drawings are to be viewed in a direction in which reference numerals can be read properly.

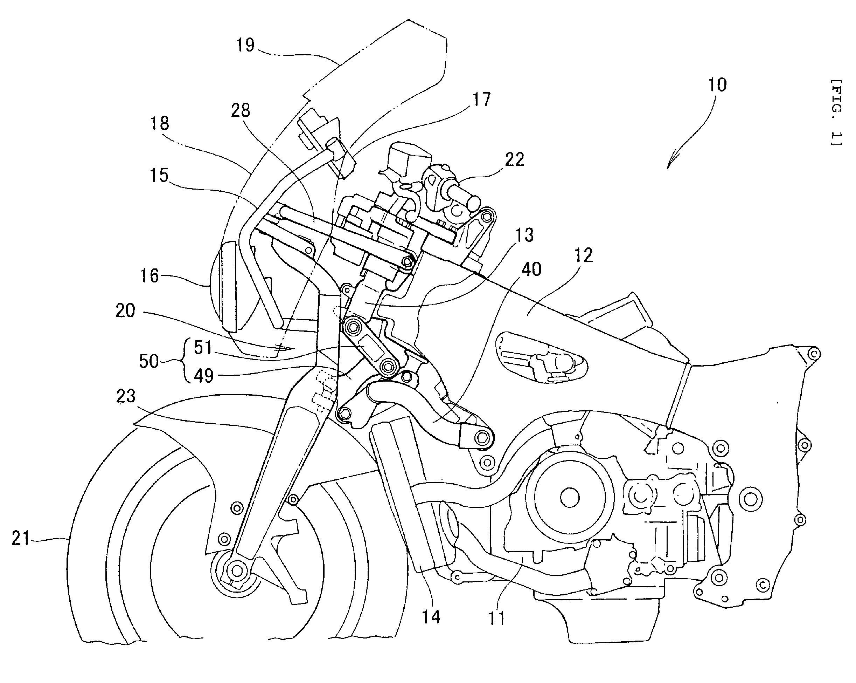

As shown in Fig. 1, in a saddle-ride type vehicle 10 is provided with a front wheel 21 in a vertically swingable and steerable manner. The front wheel 21 is attached to a front portion 13 of a vehicle body frame 12 supporting an internal combustion engine 11 as a power source via a front wheel suspension device 20.

Specifically, a fork member 23 is caused to turn by a steering force applied to steering handles 22, and thus the front wheel 21 is steered.

In the saddle-ride type vehicle 10, a radiator 14 for cooling the internal combustion engine 11 is disposed between the internal combustion engine 11 and the front wheel 21. Moreover, a bracket 15 is attached to an upper front portion of the fork member 23. A headlamp 16, meters 17, and a front cowl 18 are attached to the bracket 15. A windshield 19 extends upward from the front cowl 18.

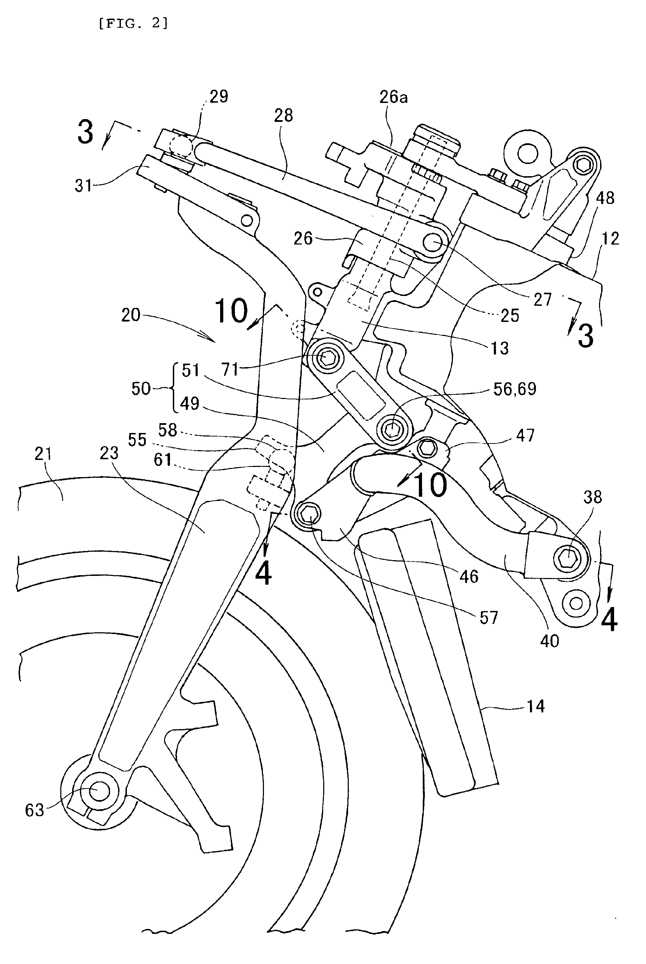

As shown in Fig. 2, a steering shaft 25 is provided in the front portion 13 of the vehicle body frame 12, and a cylindrical steering member 26 is turnably fitted about the steering shaft 25. The steering handles (reference numeral 22 in Fig. 1) are fastened to a front portion upper face 26a of the steering member 26 by using bolts. Thus, the steering member 26 can be turned about the steering shaft 25 by using the steering handles.

An upper pivot shaft 27 is provided in a rear portion of the steering member 26 and extends in the lateral direction of the vehicle (into the plane of the drawing). An upper arm 28, which is pivotally supported by the upper pivot shaft 27 so as to be vertically swingable, extends toward the front of the vehicle.

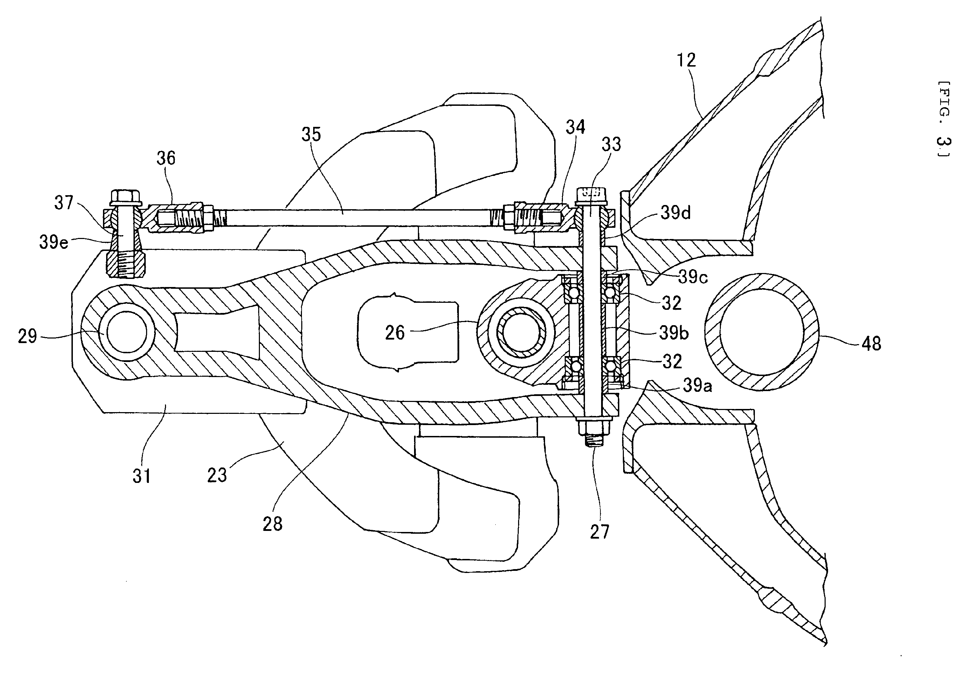

As shown in Fig. 3 (a cross-sectional view taken along the line 3-3 of Fig. 2), a rear portion of the upper arm 28 is connected to the steering member 26 by means of the upper pivot shaft 27, and a front portion thereof is connected to a projecting portion 31 by means of a second ball joint 29. The projecting portion 31 is formed integrally with an upper end of the fork member 23.

The upper pivot shaft 27 is turnably and pivotally supported by the steering member 26 by means of two bearings 32, 32, which are spaced apart laterally. Lateral movement of the bearings 32, 32 is prevented by collars 39a to 39c.

Moreover, the upper pivot shaft 27 protrudes out on one side (the right side in this example). A collar 39d and a fourth ball joint 34 are attached to this protruding portion 33. An auxiliary rod 35 extends toward the front of the vehicle from the fourth ball joint 34. A tapered collar 39e and a third ball joint 36 are attached to a front end of the auxiliary rod 35. The third ball joint 36 is fixed to the projecting portion 31 by means of a bolt 37.

As shown in Fig. 2, a lower pivot shaft 38 is provided extending in the lateral direction of the vehicle (into the plane of the drawing) in the vehicle body frame 12 at a position below the upper pivot shaft 27. A lower arm 40, which is pivotally supported in a vertically swingable manner by means of the lower pivot shaft 38, extends toward the front of the vehicle.

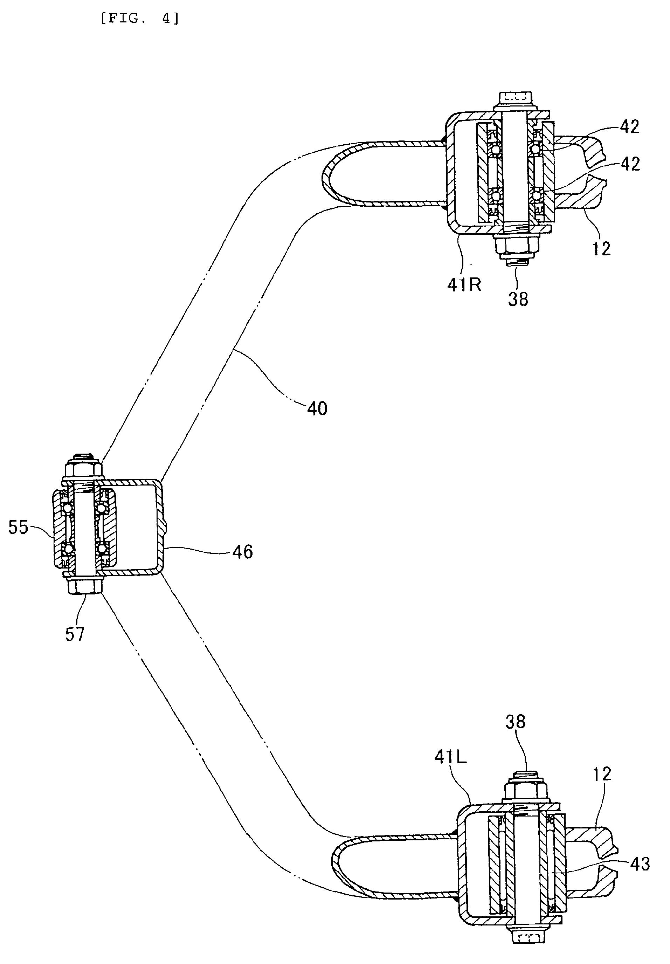

As shown in Fig. 4 (a cross-sectional view taken along the line 4-4 of Fig. 2), rear portions of the lower arm 40 are respectively square-U shaped portions 41 L, 41 R (L indicates left based on the rider, and R indicates right). The right square-U shaped portion 41 R is connected to the vehicle body frame 12 via angular bearings 42, 42 by using the lower pivot shaft 38 extending in the lateral direction, and the left square-U shaped portion 41 L is connected to the vehicle body frame 12 via a needle bearing 43 by using the lower pivot shaft 38 extending in the lateral direction.

Each of the angular bearings 42 can withstand a radial load and a thrust road. The needle bearing 43 does not prevent a movement in a thrust direction.

A change in the dimensions of the vehicle body frame 12 and the lower arm 40 in the lateral direction sometimes occurs due to an effect of the surrounding temperature (atmospheric temperature, heating by the engine). This change can be absorbed by the needle bearing 43.

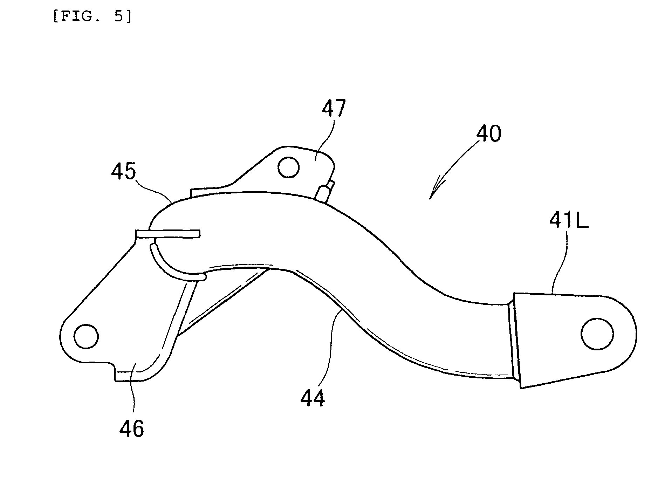

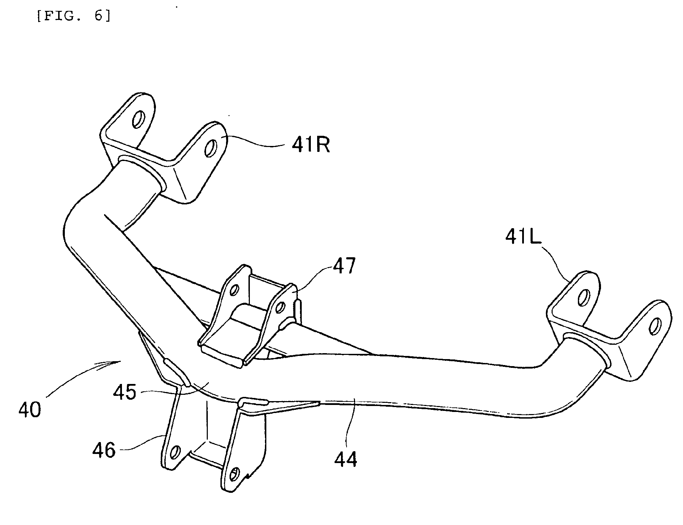

The shape and structure of the lower arm 40 are described based on Figs. 5 and 6.

As shown in Fig. 6, the lower arm 40 is an arm having the square-U shaped portions 41 L, 41 R and an U-shaped arm portion 44 as main elements. The U-shaped arm portion 44 extends laterally and has an U-shape in plan view.

As shown in Fig. 5, a link attachment portion 46 extends downward toward the front from a front portion 45 of the U-shaped arm portion 44 in a side view of the vehicle, and a cushion attachment portion 47 extends upward toward the rear from the front portion 45 of the U-shaped arm portion 44 in the side view of the vehicle.

As shown in Fig. 2, the lower arm 40 is connected to the fork member 23 via a trajectory correction link mechanism 50.

The trajectory correction link mechanism 50 is formed of a link member 49 which connects the lower arm 40 and the fork member 23 to each other, and tension rods 51 which connect the link member 49 to the vehicle body frame 12.

Moreover, the link member 49 is connected to the link attachment portion 46, and a cushion unit 48 is connected to the cushion attachment portion 47.

The tension rods 51 are pivotally supported by the front portion 13 of the vehicle body frame 12 in a vertically swingable manner to extend downward toward the rear of the vehicle.

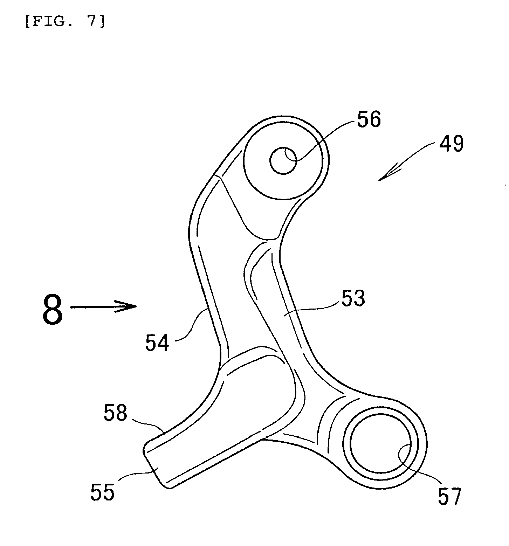

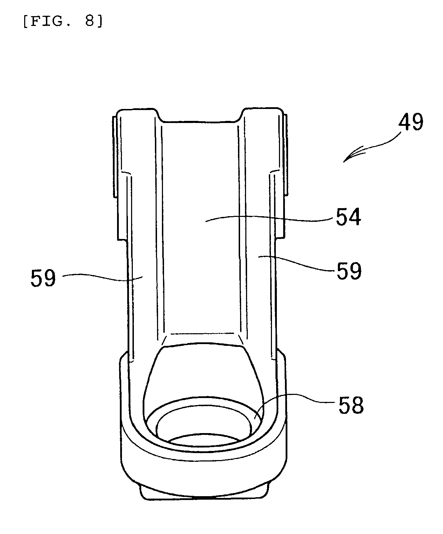

The shape and structure of the link member 49 are described based on Figs. 7 and 8.

As shown in Fig. 7, the link member 49 is a member formed of a curved portion 53 curved to project toward the front of the vehicle (forwardly convex) and a projecting portion 55 projecting frontward from a front face 54 of the curved portion 53. A tension-rod-side connection portion 56, for connection to the tension rods (reference numeral 51 in Fig. 2), is provided in an upper portion of the curved portion 53. A lower-arm-side connection portion 57, for connection to the lower arm (reference numeral 40 in Fig. 2), is provided in a lower portion of the curved portion 53. A fork-member-side connection portion 58, for connection to the fork member (reference numeral 23 in Fig. 2), is provided in the projecting portion 55.

As shown in Fig. 8, ribs 59, 59 are provided vertically along the curved portion 53 in the front face 54 of the curved portion 53. The rigidity can be increased by the ribs 59, 59, and the link member 49 can be thus made thinner and lighter in weight.

As shown in Fig. 2, the link member 49 is connected to the fork member 23 by means of first ball joint 61, and the upper arm 28 is connected to the fork member 23 by means of the second ball joint 29. Thus, the fork member 23 is capable of vertical movement.

The link member 49 swings about the lower-arm-side connection portion 57 with the vertical movement of the fork member 23. When the link member 49 swings, the curved portion 53 overlaps with the front portion of the lower arm 40. In other words, the front portion of the lower arm 40 relatively moves into the curved portion 53. As a result, the swinging amount of the link member 49 can be increased with the interference between the lower arm 40 and the link member 49 being avoided.

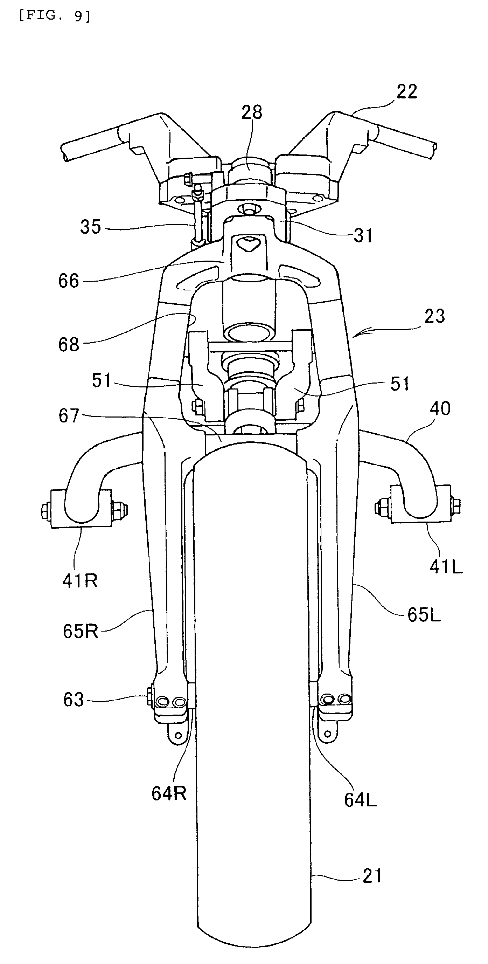

The shape of the fork member 23 is described based on Fig. 9.

As shown in Fig. 9, the fork member 23 includes a left leg portion 65L which extends from a left end portion 64L of a front wheel axle 63, a right leg portion 65R which extends from a right end portion 64R of the front wheel axle 63, an upper cross portion 66 which connects the left and right leg portions 65L, 65R to each other and to which the upper arm 28 is connected, and a lower cross portion 67 which connects the left and right leg portions 65L, 65R to each other at a position below the upper cross portion 66 and to which the lower arm 40 is connected.

The tension rods 51, 51 are visible in a front view through a space (window) 68 surrounded by the left and right leg portions 65L, 65R, the upper cross portion 66, and the lower cross portion 67.

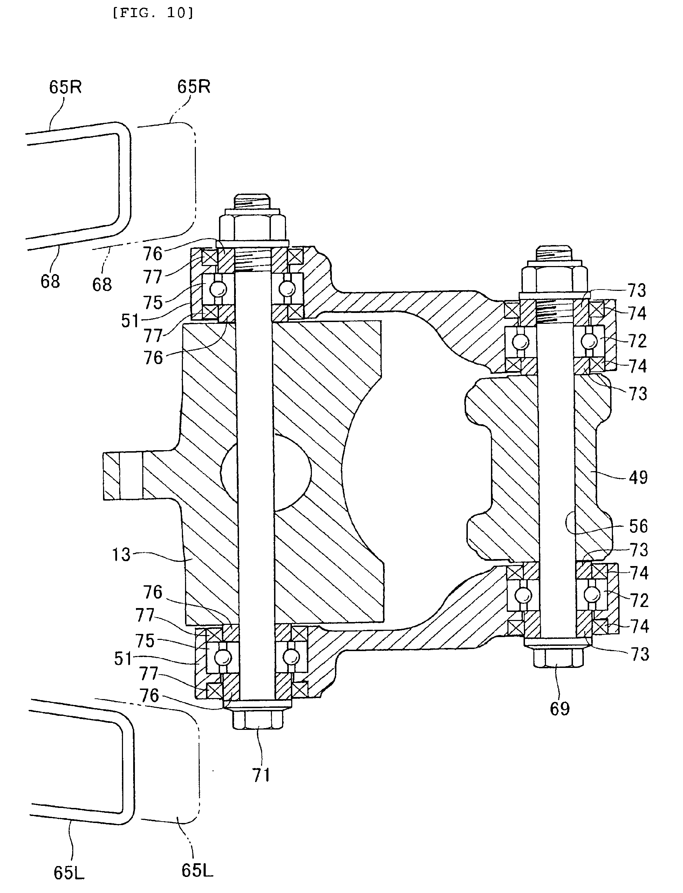

As shown in Fig. 10 (a cross-sectional view taken along the line 10-10 of Fig. 2), a rear portion of each tension rod 51 is connected to the link member 49 by means of a rear portion bolt 69 inserted into the tension-rod-side connection portion 56, and a front portion thereof is connected to the front portion 13 of the vehicle body frame via bearings 75, 75 by means of a front portion bolt 71.

Note that the rear portion bolt 69 is rotatably supported by the rear portions of the tension rods 51 via bearings 72, 72. The link member 49 is positioned laterally by using collars 73. The bearings are made dust-proof by using dust seals 74.

Similarly, the front portion bolt 71 is rotatably supported by the front portions of the tension rods 51 via the bearings 75, 75. The front portions of the tension rods 51 are positioned laterally by using collars 76. The bearings are made dust-proof by dust seals 77.

The left and right leg portions 65L, 65R sometimes come close to the tension rods 51, 51 during the vertical movement of the fork member. In this case, as is shown in dotted lines, the left and right leg portions 65L, 65R are moveable up to a position where the left and right leg portions 65L, 65R partially overlap with the tension rods 51. In other words, part of the tension rods 51, 51 can enter into the space 68 between the left and right leg portions 65L, 65R.

Since there is no worry of the tension rods 51, 51 interfering with the fork member 23, the tension rods 51, 51 can be extended in a longitudinal direction of the vehicle. Thus, the tension rods 51, 51 can be made longer.

Next, a description is given of the operation of the front-wheel suspension device 20 of the saddle-ride type vehicle with the configuration described above.

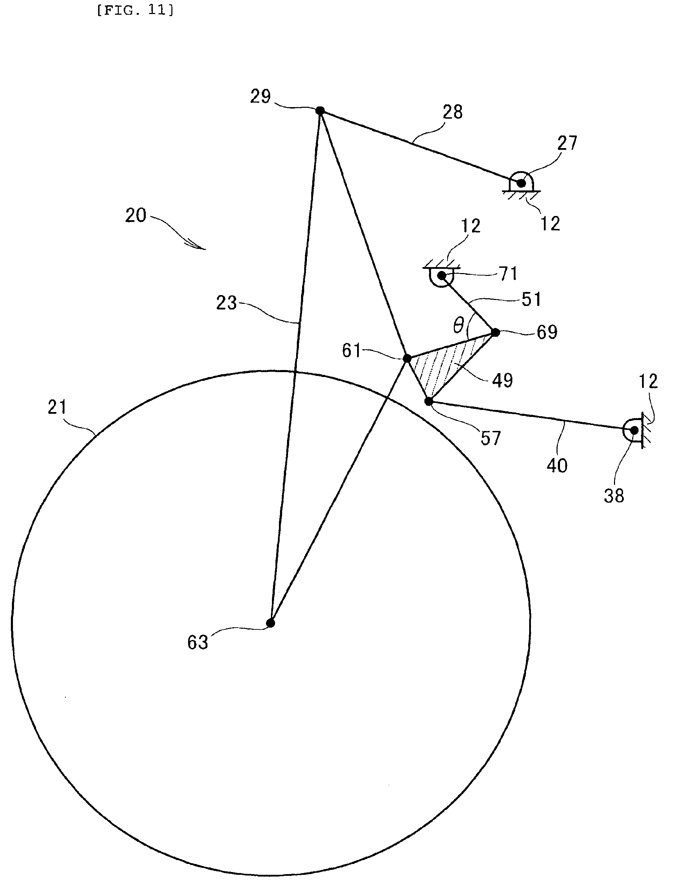

Fig. 11 is a schematic view of the front-wheel suspension device 20 in an on-vehicle 1 G state (a state where the rider is riding on the vehicle on a flat road surface). A description will be given of an operation when the front wheel 21 falls with respect to the vehicle body frame 12 with the vertical movement of the fork member 23.

At this time, the upper arm 28 rotates about the upper pivot shaft 27, in a counter-clockwise direction in the drawing. Along with this rotation, the lower arm 40 rotates about the lower pivot shaft 38 in the counter-clockwise direction in the drawing.

Since the lower-arm-side connection portion 57 moves downwardly, an angle θ formed between the tension rod 51 and the link member 49, which form a V-shape, increases. As a result, the first ball joint 61 and the rear portion bolt 69 move toward the front of the vehicle (to the left in the drawing).

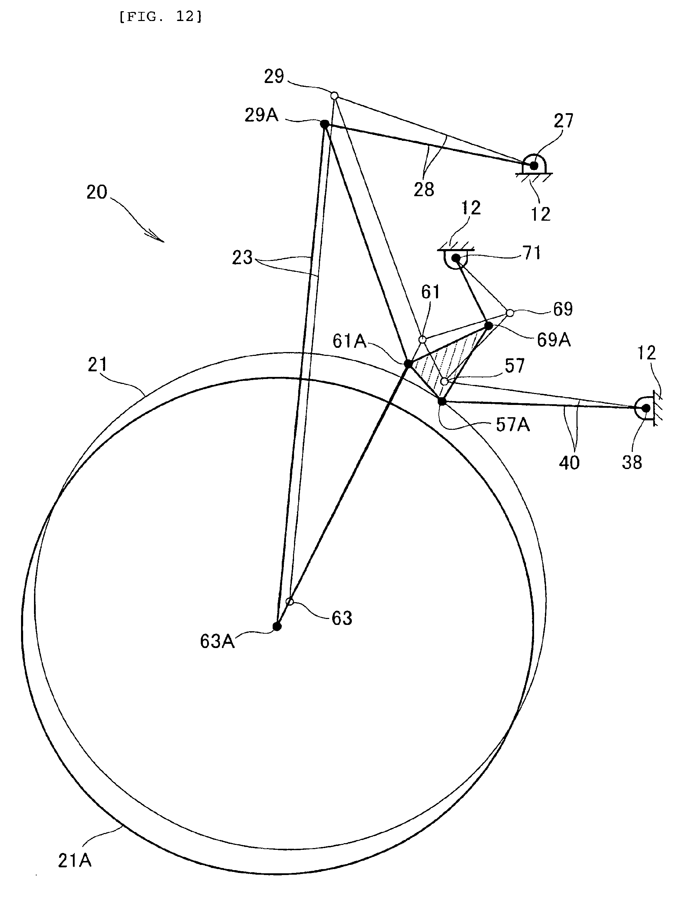

Fig. 12 shows the state where the front wheel 21 has descended to a position 21A (which corresponds to a state where the cushion unit is fully expanded). The front-wheel suspension device 20, which is shown by thin lines in the on-vehicle 1 G state, is here shown by bold lines when the cushion unit is fully expanded. The elements after the movement are denoted by adding a letter A to the reference numerals.

The fork member 23 moves obliquely downward toward the rear of the vehicle in an almost parallel manner. As a result, the front wheel axle 63 moves obliquely forward and downward to point 63A in the vehicle in a linear manner.

Next, a description will be given of an operation when the front wheel 21 rises with respect to the vehicle body frame 12 with the vertical movement of the fork member 23 in Fig. 11.

At this time, the upper arm 28 rotates about the upper pivot shaft 27 in a clockwise direction in the drawing. The lower arm 40 rotates about the lower pivot shaft 38 in the clockwise direction in the drawing. Since the lower-arm-side connection portion 57 moves upwardly, the angle θ formed between the tension rod 51 and the link member 49, which form a V-shape, decreases. As a result, the first ball joint 61 and the rear portion bolt 69 move toward the rear of the vehicle (to the right in the drawing).

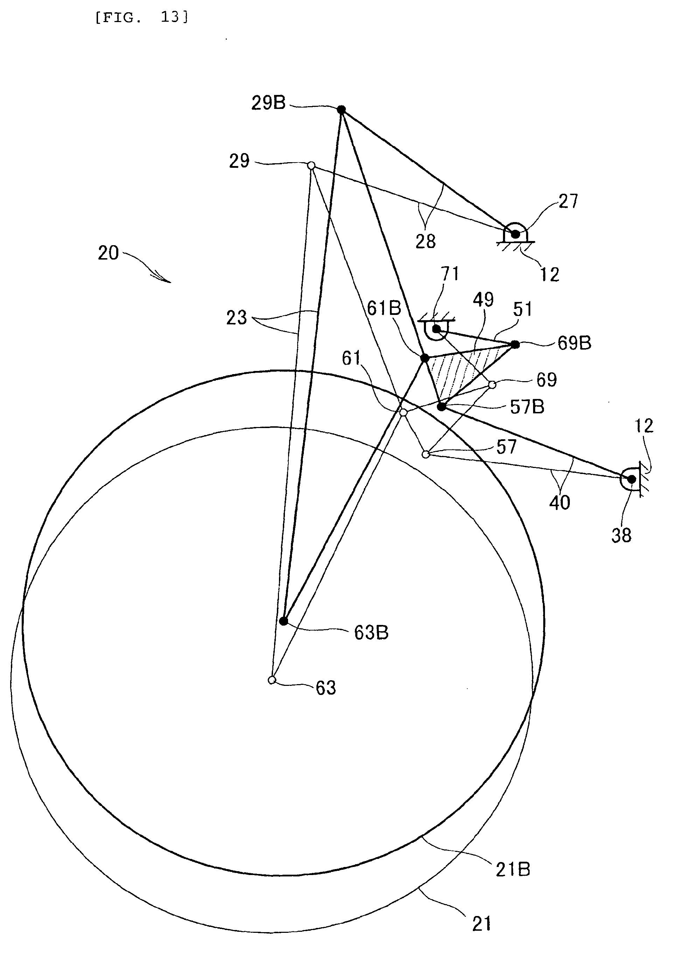

Fig. 13 shows the state where the front wheel 21 has risen to a position 21 B (which corresponds to a state where the cushion unit is fully contracted). The front-wheel suspension device 20, which is shown by thin lines in the on-vehicle 1 G state, is shown by bold lines when the cushion unit is fully contracted. The elements after the movement are denoted by adding a letter B to the reference numerals.

The fork member 23 moves almost directly upward. As a result, the front wheel axle 63 moves upward to point 63B in an almost linear manner.

Fig. 14 shows a graph of a movement trajectory which is drawn by calculating the movement trajectory of the front wheel axle 63 in detail.

A horizontal axis of Fig. 14 shows a horizontal movement amount in the longitudinal (front-rear) direction of the vehicle, and a vertical axis thereof shows a stroke in the vertical direction. A thin line A shows a movement trajectory of a front wheel axle in a telescopic fork, and a thin line B shows an example of a movement trajectory of a front wheel axle in a double wishbone structure.

A bold line shows a movement trajectory of the front wheel axle 63 of the embodiment. The movement trajectory of the front wheel axle 63 which is shown by the bold line is similar to the thin line A (movement trajectory in the telescopic fork) in a region below a horizontal line of the on-vehicle 1 G state (in an initial stage of the stroke), and is similar to the thin line B (example of the movement trajectory in the double wishbone structure) in a region above the horizontal line of the on-vehicle 1 G state (in a latter half of the stroke).

Accordingly, the embodiment provides a front wheel suspension device of a saddle-ride type vehicle which has characteristics similar to the telescopic fork in the initial stage of the stroke, and which has characteristics similar to the double wishbone structure having the trajectory as the thin line B in the latter half of the stroke.

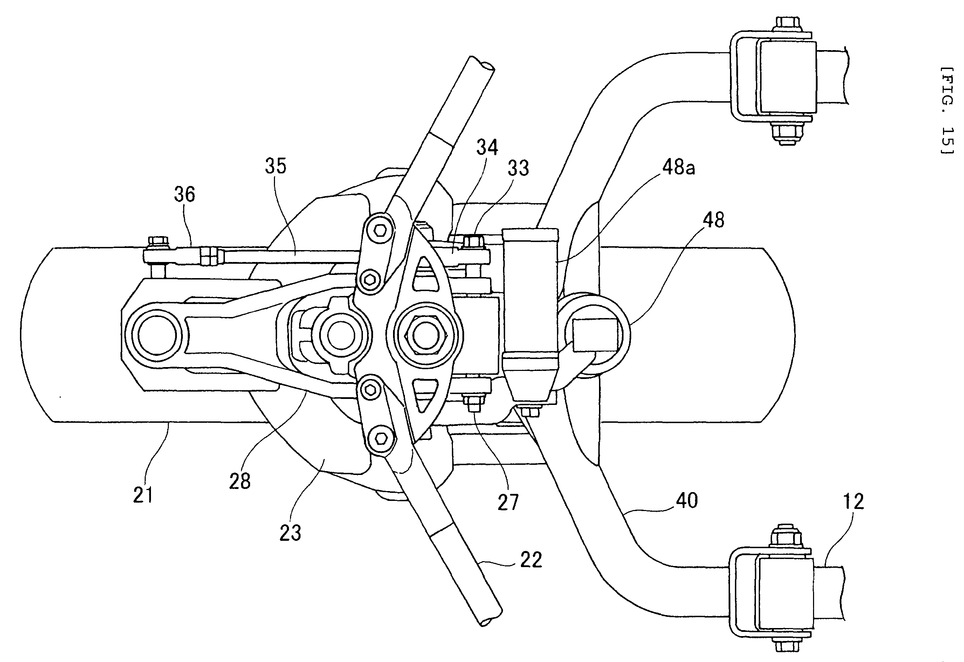

Next, a plan structure of the front portion of the saddle-ride type vehicle is described based on Fig. 15. Note that the vehicle body frame is omitted in Fig. 15.

As shown in Fig. 15, a cushion sub-tank 48a attached to the cushion unit 48 extends laterally so as to be parallel to the upper pivot shaft 27. Accordingly, the cushion sub-tank 48a can be housed in a space closer to the rear of the vehicle than the handles 22. The other elements are the same as those in Fig. 3, and thus descriptions thereof are omitted.

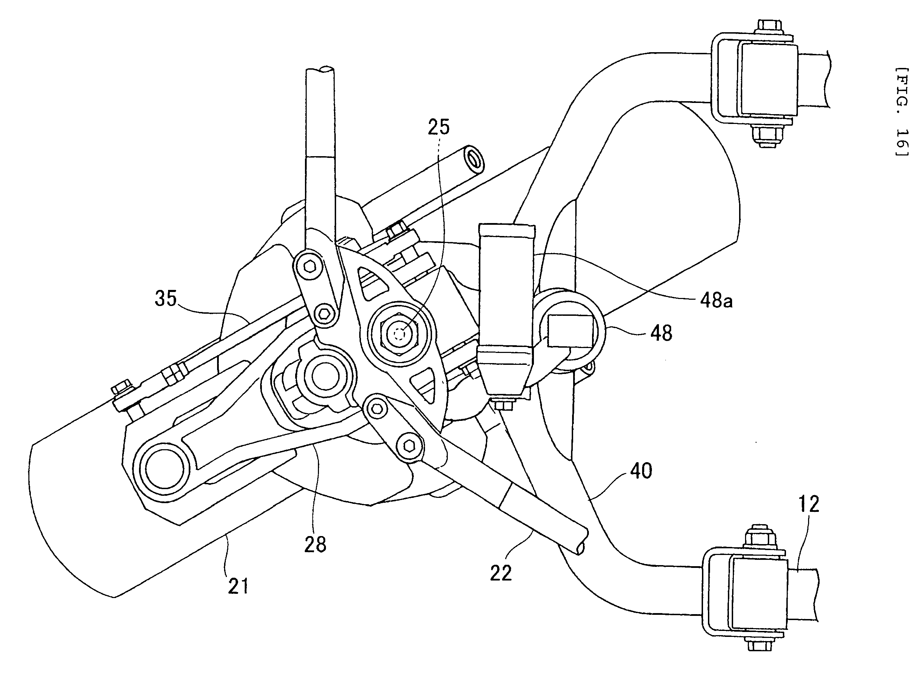

When the handles 22 are steered to the left, as shown in Fig. 16, the upper arm 28 and the auxiliary rod 35 turn together therewith about the steering shaft 25. As a result, the front wheel 21 is steered to the left.

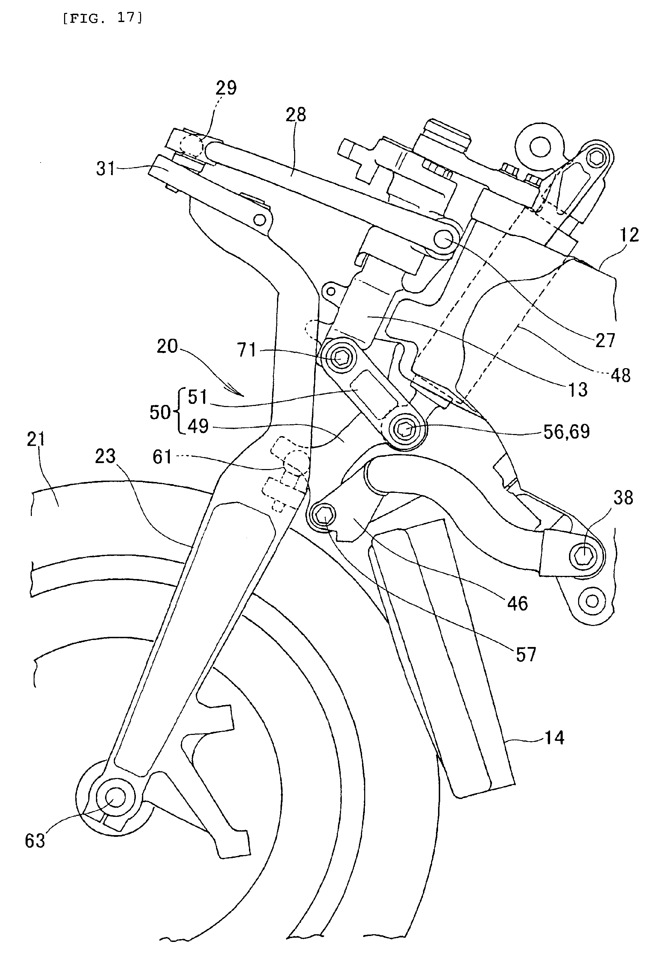

A modified example of Fig. 2 is described based on Fig. 17. In the version of Fig. 17, a lower end of the cushion unit 48 is fastened together with the tension-rod-side connection portion 56 by using the rear portion bolt 69. As a result, as shown in Fig. 17, the cushion attachment portion 47 can be omitted. The other elements are the same as those of Fig. 2. Thus, the reference numerals of Fig. 2 are used, and detailed descriptions are omitted. In other words, in addition to the mode where the lower end of the cushion unit 48 is connected to the lower arm 40, a mode may be employed in which the lower end of the cushion unit 48 is connected to the link member 49 as shown in Fig. 17.

Note that, in Fig. 2, the cushion unit 48 is connected to the lower arm 40 via the cushion attachment portion 47.

The lower arm 40 is a member which is connected to the vehicle body frame 12 in a vertically swingable manner, and which extends toward the front of the vehicle. The swing trajectory of the lower arm 40 is a trajectory extending vertically, and this makes the damping performance of the cushion unit 48 excellent.

However, there is no problem in providing the cushion unit 48 to be laid between the vehicle body frame 12 and one of a different link member 51 and the link member 49. In this case, the structure of the lower arm 40 is made simple.

Moreover, the lower-arm-side connection portion 57 is disposed closer to the rear of the vehicle than the fork-member-side connection portion 58. The lower arm 40 can be made shorter than the case where the front portion thereof is directly connected to the fork member 23, by a length reduced by connection via the link member 49.

However, there is no problem in disposing the lower-arm-side connection portion 57 closer to the front of the vehicle than the fork-member-side connection portion 58.

Moreover, the tension rods 51 are pivotally supported by the front portion 13 of the vehicle body frame 12 at a position below the steering shaft 25. The steering shaft 25 is disposed at the front end of the vehicle body frame 12. Extending the tension rods 51 toward the rear of the vehicle from the positions below such a steering shaft 25 allows the tension rods 51 to be made sufficiently long.

However, the tension rods 51 can be connected to positions other than the front portion 13, as long as the positions are in the vehicle body frame 12.

Note that the saddle-ride type vehicle is a type of vehicle which the rider straddles on a seat, and the invention can be applied to tricycles and four-wheel vehicles, in addition to two-wheel vehicles. However, the front wheel suspension device of the invention is preferable for a two-wheel vehicle.

## Claims

1. A saddle-ride type vehicle with a front wheel suspension device (20) which includes:
a steering shaft (25) provided in a front portion of a vehicle body frame (12);
a steering member (26) which can be turned about the steering shaft (25) by operation of a handle (22) attached to the steering shaft (25);
an upper arm (28) extending toward the front of the vehicle from an upper pivot shaft (27) and swinging vertically about the upper pivot shaft (27), the upper pivot shaft (27) provided in the steering member (26) and extending in a lateral direction of the vehicle;
a fork member (23) connected to a front portion of the upper arm (28) and extending downward to pivotally support a front wheel (21);
a lower arm (40) extending toward the front of the vehicle from a lower pivot shaft (38) to run below the upper arm (28), the lower pivot shaft (38) provided in the vehicle body frame (12) at a position below the upper pivot shaft (27) and extending in the lateral direction of the vehicle, the lower arm (40) connected to the fork member (23) and swinging vertically about the lower pivot shaft (38); and
a cushion unit (48) between the vehicle body frame (12) and one of the lower arm (40) and the fork member (23),
wherein a front end of the lower arm (40) is connected to the fork member (23) via a trajectory correction link mechanism (50) for correcting a stroke trajectory of a front wheel axle (63),
the trajectory correction link mechanism (50) includes a link member (49) connecting the lower arm (40) and the fork member (23) to each other and a tension rod (51) connecting the link member (49) to the vehicle body frame (12),
the tension rod (51) is swingably and pivotally supported by the vehicle body frame (12), and
the link member (49) includes a fork-member-side connection portion (58) connected to the fork member (23), a lower-arm-side connection portion (57) connected to the lower arm (40), and a tension-rod-side connection portion (56) connected to the tension rod (51);
**characterized in that** the tension rod (51) extends downward toward the rear of the vehicle;
and **in that** the lower arm (40) includes:
a U-shaped arm portion (44) having a U-shape in plan view;
a link attachment portion (46) which extends downward toward the front from a front portion (45) of the U-shaped arm portion (44) in a side view of the vehicle and to which the link member (49) is connected; and
a cushion attachment portion (47) which extends upward toward the rear from the front portion (45) of the U-shaped arm portion (44) and to which the cushion unit (48) Is connected, and
in the link member (49), a portion between the tension-rod-side connection portion (56) and the lower-arm-side connection portion (57) is a curved portion (53) which is curved to project toward the front of the vehicle.

2. The saddle-ride type vehicle with a front wheel suspension device according to claim 1, wherein the lower-arm-side connection portion (57) is disposed closer to the rear of the vehicle than the fork-member-side connection portion (58).

3. The saddle-ride type vehicle with a front wheel suspension device according to claim 1 or claim 2, wherein the cushion unit (48) is connected to the lower arm (40).

4. The saddle-ride type vehicle with a front wheel suspension device according to any preceding claim, wherein the tension rod (51) is pivotally supported by the vehicle body frame (12) at a position below the steering shaft (25).

5. The saddle-ride type vehicle with a front wheel suspension device according to any preceding claim, wherein
the fork member (23) includes:
a left leg portion (65L) which extends from a left end portion (64L) of a front wheel axle (63);
a right leg portion (65R) which extends from a right end portion (64R) of the front wheel axle (63);
an upper cross portion (66) which connects the left and right leg portions (65L, 65R) to each other and to which the upper arm (28) is connected; and
a lower cross portion (67) which connects the left and right leg portions (65L, 65R) to each other at a position below the upper cross portion (66) and to which the lower arm (40) is connected, and
part of the tension rod (51) is capable of entering into a space (68) surrounded by the left and right leg portions (65L, 65R), the upper cross portion (66), and the lower cross portion (67).

6. The saddle-ride type vehicle with a front wheel suspension device according to any preceding claim, wherein a rib (59) is provided along the curved portion (53) in a front face (54) of the curved portion (53), the front face facing forward in the vehicle.

## Patentansprüche

1. Fahrzeug der Sattelaufsitzbauart mit einer Vorderradaufhängungsvorrichtung (20), die aufweist:
eine Lenkwelle (25), die in einem vorderen Abschnitt eines Fahrzeugaufbaurahmens (12) vorgesehen ist;
ein Lenkungsteil (26), das durch Betätigung eines an der Lenkwelle (25) angebrachten Handgriffs (22) um die Lenkwelle (25) gedreht werden kann;
einen oberen Arm (28), der sich von einer oberen Schwingachse (27) zur Vorderseite des Fahrzeugs erstreckt und vertikal um die obere Schwingachse (27) schwingt, wobei die obere Schwingachse (27) im Lenkungsteil (26) vorgesehen ist und sich in einer seitlichen Richtung des Fahrzeugs erstreckt;
ein Gabelteil (23), das an einen vorderen Abschnitt des oberen Arms (28) angeschlossen ist und sich nach unten erstreckt, um ein Vorderrad (21) drehbeweglich zu lagern;
einen unteren Arm (40), der sich so von einer unteren Schwingachse (38) zur Vorderseite des Fahrzeugs erstreckt, dass er unter dem oberen Arm (28) verläuft, wobei die untere Schwingachse (38) im Fahrzeugaufbaurahmen (12) an einer Stelle unter der oberen Schwingachse (27) vorgesehen ist und sich in der seitlichen Richtung des Fahrzeugs erstreckt, wobei der untere Arm (40) an das Gabelteil (23) angeschlossen ist und vertikal um die untere Schwingachse (38) schwingt; und
eine Dämpfereinheit (48) zwischen dem Fahrzeugaufbaurahmen (12) und dem unteren Arm (40) oder dem Gabelteil (23),
wobei ein vorderes Ende des unteren Arms (40) über einen Bahnkorrekturgelenkmechanismus (50) an das Gabelteil (23) angeschlossen ist, um eine Hubbahn einer Vorderradachse (63) zu korrigieren,
wobei der Bahnkorrekturgelenkmechanismus (50) ein Gelenkteil (49), das den unteren Arm (40) und das Gabelteil (23) aneinander anschließt, und einen Zugstab (51) aufweist, der das Gelenkteil (49) am Fahrzeugaufbaurahmen (12) anschließt,
wobei der Zugstab (51) vom Fahrzeugaufbaurahmen (12) schwing- und
schwenkbeweglich gelagert ist, und
wobei das Gelenkteil (49) einen gabelteilseitigen Anschlussabschnitt (58), der an das Gabelteil (23) angeschlossen ist, einen unterer-Arm-seitigen Anschlussabschnitt (57), der an den unteren Arm (40) angeschlossen ist, und
einen zugstabseitigen Anschlussabschnitt (56) aufweist, der an den Zugstab (51) angeschlossen ist;
**dadurch gekennzeichnet, dass** sich der Zugstab (51) zur Rückseite des Fahrzeugs nach unten erstreckt;
und dass der untere Arm (40) aufweist:
einen U-förmigen Armabschnitt (44) mit einer U-Form in Draufsicht;
einen Gelenkbefestigungsabschnitt (46), der sich in einer Seitenansicht des Fahrzeugs von einem vorderen Abschnitt (45) des U-förmigen Armabschnitts (44) zur Vorderseite nach unten erstreckt und an den das Gelenkteil (49) angeschlossen ist; und
einen Dämpferbefestigungsabschnitt (47), der sich vom vorderen Abschnitt (45) des U-förmigen Armabschnitts (44) zur Rückseite nach oben erstreckt und an den die Dämpfereinheit (48) angeschlossen ist, und
im Gelenkteil (49) ein Abschnitt zwischen dem zugstabseitigen Anschlussabschnitt (56) und dem unterer-Arm-seitigen Anschlussabschnitt (57) ein gekrümmter Abschnitt (53) ist, der zur Vorderseite des Fahrzeugs vorstehend gekrümmt ist.

2. Fahrzeug der Sattelaufsitzbauart mit einer Vorderradaufhängungsvorrichtung nach Anspruch 1, wobei der unterer-Arm-seitigen Anschlussabschnitt (57) näher an der Rückseite des Fahrzeugs angeordnet ist als der gabelteilseitige Anschlussabschnitt (58).

3. Fahrzeug der Sattelaufsitzbauart mit einer Vorderradaufhängungsvorrichtung nach Anspruch 1 oder Anspruch 2, wobei die Dämpfereinheit (48) an den unteren Arm (40) angeschlossen ist.

4. Fahrzeug der Sattelaufsitzbauart, mit einer Vorderradaufhängungsvorrichtung nach einem der vorhergehenden Ansprüche, wobei der Zugstab (51) vom Fahrzeugaufbaukörper (12) an einer Stelle unter der Lenkwelle (25) schwenkbeweglich gelagert ist.

5. Fahrzeug der Sattelaufsitzbauart mit einer Vorderradaufhängungsvorrichtung nach einem der vorhergehenden Ansprüche, wobei
das Gabelteil (23) aufweist:
einen linken Schenkelabschnitt (65L), der sich von einem linken Endabschnitt (64L) einer Vorderradachse (63) erstreckt;
einen rechten Schenkelabschnitt (65R), der sich von einem rechten Endabschnitt (64R) der Vorderradachse (63) erstreckt;
einen oberen Traversenabschnitt (66), der den linken und rechten Schenkelabschnitt (65L, 65R) miteinander verbindet, und an den der obere Arm (28) angeschlossen ist; und
einen unteren Traversenabschnitt (67), der den linken und rechten Schenkelabschnitt (65L, 65R) an einer Stelle unter dem oberen Traversenabschnitt (66) miteinander verbindet und an den der untere Arm (40) angeschlossen ist; und
ein Teil des Zugstabs (51) in der Lage ist, in einen Raum (68) einzutreten, der vom linken und rechten Schenkelabschnitt (65L, 65R), vom oberen Traversenabschnitt (66) und vom unteren Traversenabschnitt (67) umgeben ist.

6. Fahrzeug der Sattelaufsitzbauart mit einer Vorderradaufhängungsvorrichtung nach einem der vorhergehenden Ansprüche, wobei eine Rippe (59) entlang des gekrümmten Abschnitts (53) auf einer Frontseite (54) des gekrümmten Abschnitts (53) vorgesehen ist, wobei die Frontseite bei dem Fahrzeug nach vorn gewandt ist.

## Revendications

1. Véhicule du type à monture à selle avec un dispositif de suspension de roue avant (20) qui comprend :
un arbre de direction (25) aménagé dans une portion avant d'un châssis de caisse de véhicule (12) ;
un élément de direction (26) que l'on peut faire
tourner autour de l'arbre de direction (25) en actionnant une poignée (22) fixée à l'arbre de direction (25) ;
un bras supérieur (28) s'étendant vers l'avant du
véhicule depuis un arbre pivot supérieur (27) et oscillant verticalement autour de l'arbre pivot supérieur (27), l'arbre pivot supérieur (27) étant aménagé dans l'élément de direction (26) et s'étendant dans une direction latérale du véhicule ;
un élément fourché (23) raccordé à une portion avant
du bras supérieur (28) et s'étendant vers le bas pour supporter à pivotement une roue avant (21) ;
un bras inférieur (40) s'étendant vers l'avant du
véhicule depuis un arbre pivot inférieur (38) pour s'étendre en dessous du bras supérieur (28), l'arbre pivot inférieur (38) étant aménagé dans le châssis de caisse du véhicule (12) dans une position située en dessous de l'arbre pivot supérieur (27) et s'étendant dans la direction latérale du véhicule, le bras inférieur (40) étant raccordé à l'élément fourché (23) et oscillant verticalement autour de l'arbre pivot inférieur (38) ; et
une unité d'amortissement (48) entre le châssis de
caisse du véhicule (12) et l'un du bras inférieur (40) et de l'élément fourché (23),
dans lequel une extrémité avant du bras inférieur (40)
est raccordée à l'élément fourché (23) via un mécanisme de liaison à correction de trajectoire (50) pour corriger une trajectoire de course d'un essieu de roue avant (63),
le mécanisme de liaison à correction de
trajectoire (50) comprend un élément de liaison (49) raccordant le bras inférieur (40) et l'élément fourché (23) l'un à l'autre ainsi qu'une tige de tension (51) raccordant l'élément de liaison (49) au châssis de caisse du véhicule (12),
la tige de tension (51) est supportée à oscillation et
à pivotement par le châssis de caisse du véhicule (12), et
l'élément de liaison (49) comprend une portion de
liaison côté élément fourché (58) raccordée à l'élément fourché (23), une portion de liaison côté bras inférieur (57) raccordée au bras inférieur (40) et une portion de liaison côté tige de tension (56) raccordée à la tige de tension (51) ;
**caractérisé en ce que** la tige de tension (51) s'étend
vers le bas en direction de l'arrière du véhicule ;
et **en ce que** le bras inférieur (40) comprend :
une portion de bras en forme de U (44) ayant une forme
de U en vue en plan ;
une portion de fixation de liaison (46) qui s'étend
vers le bas en direction de l'avant depuis une portion avant (45) de la portion de bras en forme de U (44) dans une vue latérale du véhicule et à laquelle l'élément de liaison (49) est raccordé ; et
une portion de fixation d'amortisseur (47) qui s'étend
vers le haut en direction de l'arrière depuis la portion avant (45) de la portion de bras en forme de U (44) et à laquelle l'unité d'amortissement (48) est raccordée, et
dans l'élément de liaison (49), une portion comprise
entre la portion de liaison côté tige de tension (56) et la portion de liaison côté bras inférieur (57) est une portion incurvée (53) qui est incurvée pour faire saillie vers l'avant du véhicule.

2. Véhicule du type à monture à selle avec un dispositif de suspension de roue avant selon la revendication 1, dans lequel la portion de liaison côté bras inférieur (57) est disposée plus près de l'arrière du véhicule que l'élément de liaison côté élément fourché (58).

3. Véhicule du type à monture à selle avec un dispositif de suspension de roue avant selon la revendication 1 ou la revendication 2, dans lequel l'unité d'amortissement (48) est raccordée au bras inférieur (40).

4. Véhicule du type à monture à selle avec un dispositif de suspension de roue avant selon l'une quelconque des revendications précédentes, dans lequel la tige de tension (51) est supportée à pivotement par le châssis de caisse du véhicule (12) dans une position située en dessous de l'arbre de direction (25).

5. Véhicule du type à monture à selle avec un dispositif de suspension de roue avant selon l'une quelconque des revendications précédentes, dans lequel :
l'élément fourché (23) comprend :
une portion de jambe gauche (65L) qui s'étend d'une
portion d'extrémité gauche (64L) d'un essieu de roue avant (63) ;
une portion de jambe droite (65R) qui s'étend d'une
portion d'extrémité droite (64R) de l'essieu de roue avant (63) ;
une portion transversale supérieure (66) qui raccorde
les portions de jambe gauche et de jambe droite (65L, 65R) l'une à l'autre et à laquelle le bras supérieur (28) est raccordé ; et
une portion transversale inférieure (67) qui raccorde
les portions de jambe gauche et de jambe droite (65L, 65R) l'une à l'autre dans une position située en dessous de la portion transversale supérieure (66) et à laquelle le bras inférieur (40) est raccordé, et
une partie de la tige de tension (51) est à même
d'entrer dans un espace (68) entouré par les portions de jambe gauche et de jambe droite (65L, 65R), la portion transversale supérieure (66) et la portion transversale inférieure (67).

6. Véhicule du type à monture à selle avec un dispositif de suspension de roue avant selon l'une quelconque des revendications précédentes, dans lequel une nervure (59) est prévue le long de la portion incurvée (53) dans une face avant (54) de la portion incurvée (53), la face avant étant tournée vers l'avant dans le véhicule.
